# EUROPEAN PATENT APPLICATION

(11) **EP 0 550 708 A1**
(43) Date of publication of application: **14.07.1993**
(21) Application number: 92911151.6
(22) Date of filing: 21.05.1992
(51) Int. Cl.: B60Q 3/02, B60J 3/02

(54) **LIGHTING DEVICE FOR COURTESY MIRRORS OF SUN VISORS**

(30) Priority: 04.06.1991 ES 9101337
(71) Applicant: FICO I.T.M., S.A., E-08027 Barcelona (ES)
(72) Inventor: AYMERICH MUNOZ, José, E-08191 Rubi (ES); PRAT CASTAN, Jesús, E-08191 Rubi (ES)
(74) Representative: Sugranes Moliné, Pedro (ES)
(86) International application number: ES9200043
(87) International publication number: WO9221533

(57) **Abstract**

The device of the invention is comprised of a support plate (1), obtained from insulating material, with a contour varying in relation to the tray (2) of the mirror (E), of the specular surface (4) and of the translucid plates (5) provided at its flanks. The support plate (1) is provided, on its front face (7), with incandescent lamps (8), reflecting surfaces (9) and a microswitch (10) which incorporates an actuation lever (11). On the backface (13) of the support plate (1) are fixed the supply leads for the incandescent lamps (8). The actuation of the lid (3) to the opening and concealing positions of the specular surface (4) on the lever (11) of the microswitch (10) determines respectively, the switching on or switching off of the incandescent lamps (8) and, when lit the lighting of the exterior surrounding region of the courtesy or passenger mirror (E). Application to the car industry.

## Description

### Field of the Invention

The object of the present invention is a lighting device for automobile sunvisor vanity mirrors which, in particular, is applicable to vanity mirrors provided with a folddown cover plate.

### Background of the Invention

It is well known that automobile sunvisors are provided as original equipment with a mirror which is usually known as a vanity mirror. The vanity mirror may be simply superimposed on the sunvisor or it may be integrated in the sunvisor structure. In this latter case, the vanity mirror comprises in general basically a boxlike shell and a cover plate which may be moved at will by the user.

The boxlike shell of the mirror is generally basically prismatic in shape and contains the mirrored surface as such and other usual items such as may be those for providing a diffuse lighting in the immediate surroundings of the mirror. The mirror cover plate, which is in general of a folddown type, is for protecting the mirrored surface from the environment to keep its reflective properties constant.

In vanity mirrors integrated in the structure of the sunvisor and provided with means for illuminating the immediate surroundings of the mirror, such means consist basically of one or more incandescent lamps arranged behind corresponding translucent surfaces suitably disposed relative to the mirrored surface; and electrical conductors formed by metallic, generally brass, strips which, further to forming the electrical supply circuit, are machined and are used simultaneously as lampholders for the said incandescent lamps and as switch for the electric current. These metal strips with the switch function are operated by the cover plate of the mirror when revealing or concealing the mirrored surface.

The fact that both the electrical circuit and the lampholders and the circuit switch are formed by metal strips causes the following drawbacks in general: to shape the said electrical circuit, lampholders and switch, a large number of suitably linked together strip portions are required; each metal strip portion requires a corresponding machining operation with regard to the functions it is to perform; the boxlike shell of the mirror must have a large number of retaining projections for positionally fixing the plurality of metal strips it contains; and there is a limited operative reliability affecting, because of their very nature, the metal strips used as switch.

Generally speaking, the means regularly used for illuminating the immediate surroundings of the vanity mirror described above are expensive to produce and have a low operative reliability which is a frequent cause of breakdowns and/or misfunctioning.

### Summary of the Invention

To provide a solution which is cheap and highly operatively reliable in comparison with the known embodiments of means for lighting vanity mirrors described above, there is disclosed a lighting device for sunvisor vanity mirrors having a new structure.

The lighting device of the invention is characterized in that it comprises a support plate of variable contour relative to the internal configuration of the mirror boxlike shell, of the mirrored surface as such and of the translucent plates flanking it, said support plate being made from insulating material and attached to the mirror boxlike shell, preferably, by means of retaining projections with which it is formed, there being firmly attached to the support plate, on the front surface thereof, one or more incandescent lamps for illuminating the immediate surroundings of the mirror, a microswitch provided with an operating lever which is actuated to break or make the circuit by the mirror cover plate, depending respectively on whether the latter is in the mirrored surface concealing or open position and reflective surfaces arranged in functional correspondence with the incandescent lamp(s) to increase the light flow orientated outwardly of the vanity mirror boxlike shell; and on the rear surface thereof, the electrical conductors forming the incandescent lamp supply circuit.

The described features of the device of the invention provide a solution to the problems derived, in the main, from the high number of metal strip portions forming the known embodiments of lighting device for sunvisor vanity mirrors. In fact, it is fundamental in this respect that in the device of the invention, the supply conductors to the incandescent lamps be attached to the support plate forming a so-called printed circuit. In this way, with the device of the invention not using metal strips as conductors and/or lampholders, the number of components of the device is substantially reduced and, furthermore, complementary machining operations as in the known embodiments are not required, lower production costs therefore being obtained with the device of the invention.

The fact that there is required a number of retaining projections for attaching the support plate of the device of the invention to the boxlike shell of the mirror which is, in any case, smaller than the number of retaining projections required for attachment of the plurality of metal strips used in the known embodiments of lighting devices, contributes to a reduction of production costs, all of which has its effect, mainly, in shorter assembly times for the device of the invention.

Furthermore, the operative reliability of the lighting device of the invention is notably increased over the known embodiments by the use of a microswitch. Of the many to be found on the market, this microswitch may be any one which is dimensionally and functionally adapted to the conditions required for each particular application. In fact, it is obvious that, in any case, the number of operations, i.e. the number of circuit making and breaking operations admitted by these microswitches is much higher than the number of operations which may be performed by the exposed machined metal strips used as a switch by the known lighting device embodiments.

### Brief Description of the Drawings

The lighting device for sunvisor vanity mirrors of the invention is illustrated in the sheets of drawings accompanying the description. In the drawings:
Figure 1 is a front view of the vanity mirror provided with a folddown cover plate.
Figure 2 is a front view of the vanity mirror, showing the device of the invention.
Figures 3 and 4 are cross section views showing the operation of the device of the invention.
Figure 5 is a rear view of the device of the invention.

### Detailed Description of the Embodiment

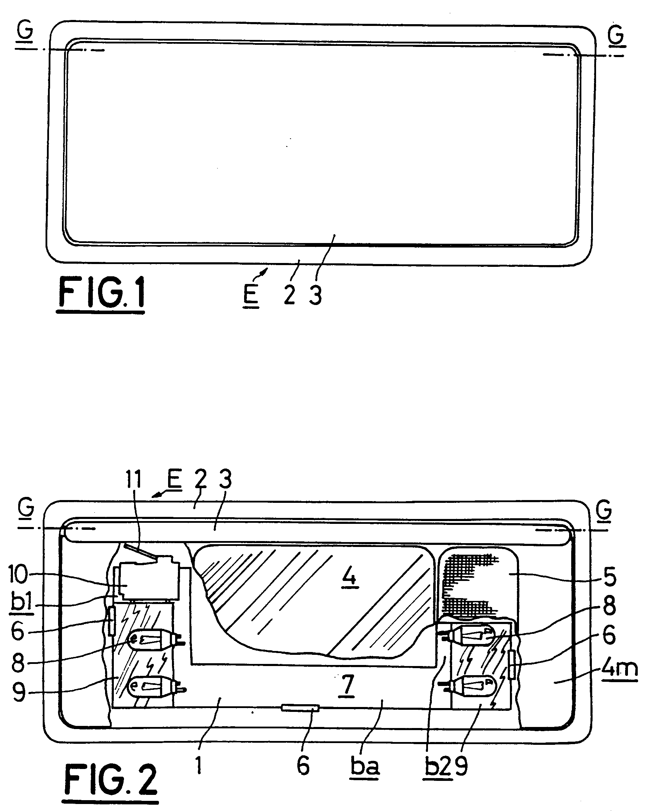

The lighting device for sunvisor vanity mirrors of the invention described as embodiment comprises, as shown in Figure 2 of the drawings, the support plate 1 attached to the vanity mirror E.

In this embodiment, as shown in Figures 1 and 2, the vanity mirror E has an essentially rectangular contour with rounded corners, although it may have any other shape appropriate for each particular application without this affecting the functionality of the device of the invention. The vanity mirror E basically comprises the boxlike shell 2 and the cover plate 3, which may be folded down and may be opened and closed at will by the user.

Figures 2, 3 and 4 show how the boxlike shell 2 is essentially prismatic in shape, is open on one side and is dimensioned to house, in the present embodiment, the mirrored surface 4, which is attached to the front module 4m, and the support plate 1.

Figures 1 and 2 show how the cover plate 3 may rotate about the axes referenced as G and stably occupy the position shown in Figure 1, corresponding to the position in which the mirrored surface 4 is concealed and the position shown in Figure 2, corresponding to the one in which said mirrored surface 4 is open to view.

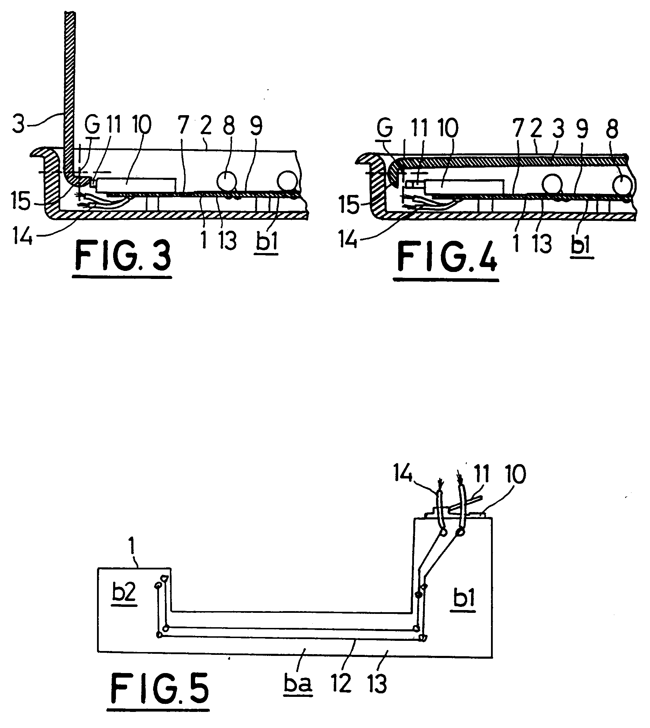

In this embodiment, the support plate 1 is made from insulating materials, such as bakelite, among others, and, as shown in Figures 2 and 5, is essentially U-shaped in functional relationship with the situation and dimensioning of the mirrored surface 4 and of the translucent plates 5 longitudinally flanking it on both sides.

In a similar way as pointed out for the boxlike shell 2 of the mirror E, the support plate 1 may have any other shape appropriate for each particular application, without this affecting the operativity of the device and, in particular, such shape will be dictated mainly by the situation and dimensioning of the mirrored surface 4 and of the translucent plates 5 relative to the boxlike shell 2.

Figure 2 shows how the boxlike shell 2 of the mirror E is provided with three retaining projections 6 for setting the position occupied by the support plate 1. Such retaining projections 6 are spaced apart in such a way that the support plate 1 is fixed to the boxlike shell 2 by both arms b1 and b2 thereof and by the base ba.

Figure 2 shows how in this embodiment of the device of the invention, the front surface 7 of the support plate 1 is provided with four incandescent lamps 8, with two reflective surfaces 9 and with the microswitch 10.

The four incandescent lamps are arranged on the arms b1 and b2 of the support plate 1 in such a way that two of the incandescent lamps 8 are to be found on the arm b1 and the other two incandescent lamps 8 are on the arm b2, each pair of incandescent lamps 8 being spaced a relatively short distance away from a respective translucent plate 5.

Figures 2, 3 and 4 show how the arms b1 and b2 of the support plate 1 are provided with respective reflective surfaces 9, the purpose of which is to reflect the part of the light flow generated by the incandescent lamps 8 directed towards the interior of the boxlike shell 2 back to the outside of the boxlike shell 2 through the translucent plates 5.

The two reflective surfaces 9 form, in this embodiment, the front surface of respective sheets provided on the rear surface thereof with adhesives allowing them to be attached to the support plate 1.

Figure 2 shows how the microswitch 10, provided with the lever 11 as actuating means, is attached to the free end of the arm b1 of the support plate 1.

The arrangement of the four incandescent lamps 8 and of the two reflective surfaces 9 in the support plate 1 shown in Figure 2 depends on the position and dimensions of the two translucent plates 5. In a similar way as described above for the support plate 1, the arrangement and number of the incandescent lamps 8 and of the reflective surfaces 9 may vary in accordance with the needs of each particular application, without the operativity of the device of the invention being affected.

The electrical connexion of the incandescent lamps 8, which are shunted, and of the microswitch 10 is effected by the conductors 12 attached to the rear surface 13 of the support plate 1 as shown in Figure 5, the four incandescent lamps 8 and the microswitch 10 being connected to the conductors 12 by points of solder which simultaneously attach said items 8 and 10 to the support plate 1.

In this embodiment, the conductors 12 form a circuit of the so-called printed type and this circuit is connected to the supply line from the automobile battery with the two conductors 14 formed by cables having an insulated covering.

For greater clarity of disclosure the front module 4m comprising the mirrored surface 4 and the two translucent plates 5 has not been shown in Figures 3 and 4 of the drawing sheets.

The lighting device for sunvisor vanity mirrors of the invention works as follows: Figure 3 shows how when the cover plate 3 of the vanity mirror E is in the position in which the mirrored surface 4 is open to view, the inner projection 15 formed on the inside of the cover plate 3 presses against the lever 11 of the microswitch 10, making the supply circuit for the four incandescent lamps 8 which, consequently, will be illuminated and, through the translucent plates 5, will illuminate the immediate surroundings of the vanity mirror E, this situation being maintained during the whole time the cover plate 3 is in the said open-to-view position of the mirrored surface 4. On the other hand, Figure 4 shows how when the cover plate 3 is in the position of concealing the mirrored surface 4, the inner projection 15 does not bear upon the lever 11 of the microswitch 10 which, in this way, maintains its circuit and the supply to the four incandescent lamps 8 broken, the latter being consequently extinguished, this situation being maintained throughout the time that the cover plate 3 is in the position in which it conceals the mirrored surface 4 from view.

## Claims

1. A lighting device for sunvisor vanity mirrors, characterized in that it comprises a support plate (1) of variable contour relative to the internal configuration of the mirror (E) boxlike shell (2), of the mirrored surface (4) as such and of the translucent plates (5) flanking it, said support plate (1) being made from insulating materials and attached to the mirror (E) boxlike shell (2), preferably, by means of retaining projections (6) with which it is formed, there being firmly attached to the support plate (1), on the front surface (7) thereof, one or more incandescent lamps (8) for illuminating the immediate surroundings of the mirror (E), a microswitch (10) provided with an actuating lever (11) which is operated to break or make the circuit thereof by the mirror (E) cover plate (3), depending respectively on whether the latter is in the mirrored surface (4) concealing or open position and reflective surfaces (9) arranged in functional correspondence with the incandescent lamp(s) (8) to increase, the light flow orientated outwardly of the vanity mirror (E) boxlike shell (2); and on the rear surface (13) thereof, the electrical conductors (12, 14) forming the incandescent lamp (8) supply circuit.
